# EUROPEAN PATENT APPLICATION

(11) **EP 4 830 942 A1**
(43) Date of publication of application: **28.10.2026**
(21) Application number: 24906133.4
(22) Date of filing: 05.12.2024
(51) Int. Cl.: B60B 35/12, B60B 35/14, B60B 35/18, B60K 1/00, B60K 17/04, F16H 57/029, F16H 57/023, F16H 57/021, B60L 15/20

(54) **ELECTRIC DRIVE AXLE, VEHICLE AND CONTROL METHOD OF ELECTRIC DRIVE AXLE**

(30) Priority: 21.12.2023 CN 202311779740
(71) Applicant: Zhejiang Geely Holding Group Co., Ltd., Hangzhou, Zhejiang 310051 (CN); Zhejiang Farizon New Energy Commercial Vehicle Group Co., Ltd., Hangzhou City, Zhejiang 310051 (CN); Zhejiang Farizon Zhixin Technology Co., Ltd., Hangzhou, Zhejiang 310052 (CN); Huzhou Glinx Powertrain Development Co., Ltd., Huzhou, Zhejiang 313009 (CN); Zhejiang Farizon Commercial Vehicles R&D Co., Ltd., Hangzhou, Zhejiang 310051 (CN)
(72) Inventor: GUO, Lishu, Hangzhou, Zhejiang 310051 (CN); ZHOU, Xianyong, Hangzhou, Zhejiang 310051 (CN); ZHANG, Yan, Hangzhou, Zhejiang 310051 (CN); SHEN, Kuanrong, Hangzhou, Zhejiang 310051 (CN)
(74) Representative: Boult Wade Tennant LLP
(86) International application number: PCT/CN2024/137241
(87) International publication number: WO 2025/130649

(57) **Abstract**

An electric drive axle, a vehicle, and a control method for the electric drive axle. The electric drive axle includes: a motor having a motor output shaft provided with a first axial through hole; a transmission assembly including a first housing and a transmission mechanism, where the first housing has a first internal space, the transmission mechanism is disposed within the first internal space, and the motor output shaft extends from outside of the first housing into the first internal space, where the transmission mechanism has a power input member, a first power output member, and a second power output member, where the motor output shaft, the power input member, the first power output member, and the second power output member are coaxially arranged in sequence, and the power input member is provided with a second axial through hole; a first half-shaft, extending through the first axial through hole and the second axial through hole and coaxially connected to the first power output member, where a gap is formed between the first half-shaft and a hole wall of the first axial through hole; a second half-shaft, coaxially connected to the second power output member; a first oil seal hermetically arranged in the gap, where the first oil seal separates the gap from the first internal space, thereby preventing oil fluid in the first internal space from entering the gap, facilitating avoidance of oil churning, further reducing heat generation of the first half-shaft and the motor output shaft and lowering noise.

## Description

The present application claims priority to Chinese Patent Application No. 202311779740.5, entitled with "ELECTRIC DRIVE AXLE, VEHICLE AND CONTROL METHOD FOR ELECTRIC DRIVE AXLE", and filed with the China National Intellectual Property Administration on December 21, 2023, which is hereby incorporated by reference in its entirety.

### TECHNICAL FIELD

The present application relates to the field of vehicle technology, particularly to an electric drive axle, a control method for the electric drive axle, and a vehicle.

### BACKGROUND

Electric drive axles are widely used in the power systems of hybrid vehicles and electric vehicles. An electric drive axle includes a motor and a transmission mechanism, in which kinetic energy output by the motor is transmitted to the vehicle via the transmission mechanism for driving the vehicle.

By its arrangement, the electric drive axle can be classified into a coaxial electric drive axle, a parallel-axis electric drive axle, an electric drive axle with a motor perpendicular to the axle and others, among which the coaxial electric drive axle offers higher transmission efficiency than other drive axle.

However, existing coaxial electric drive axles still suffer from severe heat generation and high noise during operation.

### SUMMARY

The present application provides an electric drive axle, a control method for the electric drive axle, and a vehicle, so as to reduce heat generation and lower noise on the premise that the electric drive axle has high transmission efficiency.

In a first aspect, the present application provides an electric drive axle, including:
a motor including a motor output shaft provided with a first axial through hole;
a transmission assembly, including a first housing and a transmission mechanism, where the first housing has a first internal space, the transmission mechanism is disposed within the first internal space, and the motor output shaft extends from outside of the first housing into the first internal space; the transmission mechanism has a power input member, a first power output member, and a second power output member; the motor output shaft, the power input member, the first power output member, and the second power output member are coaxially arranged in sequence; and the power input member is provided with a second axial through hole;
a first half-shaft, extending through the first axial through hole and the second axial through hole and coaxially connected to the first power output member, where a gap is formed between the first half-shaft and the hole wall of the first axial through hole;
a second half-shaft, coaxially connected to the second power output member;
a first oil seal, hermetically arranged in the gap, where the first oil seal separates the gap from the first internal space.

Optionally, the outer diameter of the first half-shaft is greater than the outer diameter of the second half-shaft.

Optionally, the transmission mechanism includes a planetary variable-speed mechanism and a differential mechanism that are interconnected for mutual transmission; the power input member is the input member of the planetary variable-speed mechanism; the second axial through hole extends axially through the planetary variable-speed mechanism; and both the first power output member and the second power output member are output members of the differential mechanism.

Optionally, the planetary variable-speed mechanism includes a first planetary gear set and a second planetary gear set, where a sun gear of the first planetary gear set is the power input member, a planet carrier of the first planetary gear set is connected to a sun gear of the second planetary gear set, and a planet carrier of the second planetary gear set is connected to the input member of the differential mechanism.

Optionally, the motor further includes a second housing connected to the first housing, and the second housing has a second internal space;
the electric drive axle further includes a first isolating portion, which is disposed on the first housing or the second housing, and the first isolating portion is interposed between the second internal space and the first internal space; the first isolating portion is provided with a first through-hole for allowing the motor output shaft to pass through;
where a second oil seal and at least one bearing are disposed between the inner wall of the first through-hole and the outer wall of the motor output shaft.

Optionally, the transmission mechanism includes a planetary variable-speed mechanism and a differential mechanism that are interconnected for mutual transmission, where the planetary variable-speed mechanism includes a first planetary gear set and a second planetary gear set; a sun gear of the first planetary gear set is the power input member, a planet carrier of the first planetary gear set is connected to a sun gear of the second planetary gear set; a planet carrier of the second planetary gear set is connected to the input member of the differential mechanism, and both the first power output member and the second power output member are output members of the differential mechanism;
where a bearing is provided between the planet carrier of the first planetary gear set and the first isolating portion, and a bearing is also provided between the planet carrier of the second planetary gear set and the first housing; or, a bearing is provided between the planet carrier of the first planetary gear set and the first housing, and a bearing is also provided between the planet carrier of the second planetary gear set and the first housing.

Optionally, the differential mechanism is mounted on a differential mechanism housing, and the differential mechanism housing is integrally formed with the planet carrier of the second planetary gear set.

In a second aspect, the present application further provides a vehicle including any one of the aforementioned electric drive axles.

In a third aspect, the present application further provides a control method for an electric drive axle, where the electric drive axle is any one of the aforementioned electric drive axles, and the control method includes:
determining a current slope based on an opening range within which a current accelerator-pedal-opening falls and a mapping relationship between a preset accelerator-pedal-opening range and a slope, where the slope refers to a slope between a torque of the motor output shaft and an accelerator-pedal-opening, and in the mapping relationship, the accelerator-pedal-opening range with a larger opening value corresponds to a smaller slope value;
obtaining a torque of the motor based on the current accelerator-pedal-opening and the current slope.

Optionally, determining a current slope based on an opening range within which a current accelerator-pedal-opening falls and a mapping relationship between a preset accelerator-pedal-opening range and a slope includes:
obtaining the current accelerator-pedal-opening and a preset slope change trigger opening;
determining the current slope as a first slope if the current accelerator-pedal-opening is greater than the preset slope change trigger opening; or determining the current slope as a second slope if the current accelerator-pedal-opening is less than the preset slope change trigger opening, where the first slope is less than the second slope.

In the electric drive axle provided by the present application, by mounting a first oil seal between the motor output shaft and the first half-shaft, a gap between the motor output shaft and the first half-shaft is separated from the corresponding first internal space where the transmission mechanism is mounted, which can prevent oil fluid for lubricating the transmission mechanism in the first internal space from entering the gap, and can be conductive to avoiding oil churning, thereby facilitating reducing heat generation of the first half-shaft and the motor output shaft near the gap and lowering noise.

In the control method for the electric drive axle provided by this application, since the accelerator-pedal-opening range with a larger opening value corresponds to a smaller slope value between the motor torque and the accelerator-pedal-opening, the motor torque increases rapidly at the initial stage of motor startup, which can improve the response of the motor to the power system, and then increases slowly, thereby reducing shock degree of the vehicle and ensuring starting reliability of the vehicle.

### BRIEF DESCRIPTION OF DRAWINGS

The accompanying drawings herein are incorporated in and constitute a part of the description, which show embodiments conforming to the present application; and are used to explain the principles of the present application together with the description.
FIG. 1 is an exemplary schematic view of an electric drive axle of the present application.
FIG. 2 is an exemplary schematic view of an internal structure of an electric drive axle of the present application.
FIG. 3 is a flow block diagram of a control method for an electric drive axle of the present application.
FIG. 4 is a schematic view of a slope relationship between opening of an accelerator pedal and torque of a motor output shaft in an example of a control method of the present application.

Reference numerals:
100-motor; 110-motor output shaft; 111-first axial through hole; 120-second housing; 121-second internal space; 130-stator; 140-rotor;
200-first housing; 201-first internal space;
300-transmission mechanism; 310-first planetary gear set; 311-power input member; 3111-second axial through hole; 312-first planet gear; 313-first ring gear; 314-first planet carrier; 320-second planetary gear set; 321-second sun gear; 322-second planet gear; 323-second ring gear; 324-second planet carrier; 330-differential mechanism; 331-first power output member; 332-second power output member; 333-differential mechanism housing;
410-first half-shaft;
420-second half-shaft;
510-first oil seal; 520-second oil seal; 530-third oil seal;
610-first isolating portion; 611-first through-hole; 620-second isolating portion; 621-second through-hole;
710-first motor mounting bearing; 720-second motor mounting bearing; 730-first transmission mechanism support bearing; 740-half-shaft support bearing; 750-second transmission mechanism support bearing; 760-third transmission mechanism support bearing;
800-wheel;
X-gap.

Through the above drawings, specific embodiments of the present application have been shown, which will be described in more detail in the following. These drawings and text descriptions are not intended to limit the scope of the conception of the present application in any way, but to illustrate the concept of the present application to those skilled in the art by referring to specific embodiments.

### DESCRIPTION OF EMBODIMENTS

The exemplary embodiments will be described in detail herein, examples of which are illustrated in the accompanying drawings. Where the following description refers to the accompanying drawings, the same reference numerals in different drawings denote the same or similar elements unless otherwise indicated. The embodiments described in the following exemplary embodiments do not represent all embodiments consistent with the present application. Instead, they are merely examples of apparatuses and methods consistent with some aspects of the present application as detailed in the appended claims.

By arrangement, the electric drive axle can be classified into a coaxial electric drive axle, a parallel-axis electric drive axle, an electric drive axle with a motor perpendicular to the axle and others, among which the coaxial electric drive axle offer higher transmission efficiency than other drive axle.

In existing coaxial electric drive axles, grease lubrication is generally adopted for the lubrication between the motor output shaft and the half-axle extending through the motor output shaft. Oil fluid for lubricating the transmission mechanism often enters the small gap between the motor output shaft and the respective half-axle, causing oil churning, which leads to serve overheating of the motor output shaft and half-shaft within the electric drive axle and excessive noise from the electric drive axle.

In this regard, the present application provides an electric drive axle, in which a gap sufficient for mounting an oil seal is arranged between the motor output shaft and the half-axle extending through the motor output shaft, and an oil seal is correspondingly mounted within this gap, so as to prevent lubricating oil fluid from entering the gap and avoid the occurrence of oil churning.

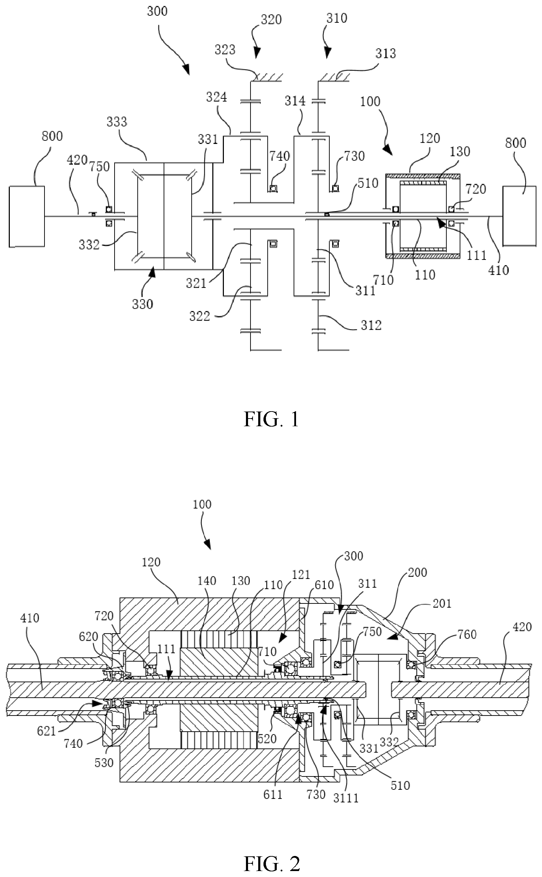

FIG. 1 shows an exemplary schematic view of an electric drive axle of the present application, and FIG. 2 shows an exemplary structural schematic view of the electric drive axle of the present application. Referring to FIG. 1 and FIG. 2, the present application provides an electric drive axle including a motor 100, a transmission assembly, a first half-shaft 410, a second half-shaft 420, and a first oil seal 510. The motor 100 includes a motor output shaft 110, where the motor output shaft 110 is provided with a first axial through hole 111. The transmission assembly includes a first housing 200 and a transmission mechanism 300. The first housing 200 has a first internal space 201, within which the transmission mechanism 300 is disposed. The motor output shaft 110 extends from outside of the first housing 200 into the first internal space 201. The transmission mechanism 300 has a power input member 311, a first power output member 331, and a second power output member 332. The motor output shaft 110, the power input member 311, the first power output member 331, and the second power output member 332 are coaxially arranged in sequence. The power input member 311 is provided with a second axial through hole 3111. The first half-shaft 410 runs through the first axial through hole 111 and the second axial through hole 3111, and is coaxially connected to the first power output member 331. A gap is formed between the first half-shaft 410 and the hole wall of the first axial through hole 111. The second half-shaft 420 is coaxially connected to the second power output member 332. A first oil seal 510 is hermetically mounted in the gap, and the first oil seal 510 separates the gap from the first internal space 201.

The aforementioned motor 100 functions to convert electrical energy into rotational kinetic energy of the motor output shaft 110. For example, the motor 100 further includes a second housing 120, a stator 130, and a rotor 140. The second housing 120 has a second internal space 121, the stator 130 is fixedly mounted within the second internal space 121 of the second housing 120, the motor output shaft 110 is positioned within the second housing 120 via motor mounting bearings, and the rotor 140 passes through the interior of the stator 130 and is sleeved on the motor output shaft 110 to drive the motor output shaft 110 to rotate. It should be noted that the aforementioned second housing 120 may be detachably connected to the first housing 200, and it is not excluded that the second housing 120 is integrally formed with the first housing 200. Additionally, both the first motor mounting bearing 710 and the second motor mounting bearing 720 in FIG. 2 belong to the motor mounting bearing.

The function of the transmission mechanism 300 is to transmit the rotational torque of the motor output shaft 110 to the first half-shaft 410 and the second half-shaft 420. Referring to FIG.1 and FIG. 2, the transmission mechanism 300 includes a planetary variable-speed mechanism and a differential mechanism 330 that that are interconnected for mutual transmission. The power input member 311 is the input member of the planetary variable-speed mechanism, and the second axial through hole 3111 extends axially through the planetary variable-speed mechanism. Both the first power output member 331 and the second power output member 332 are output members of the differential mechanism 330. Since the rotational center of the planetary variable-speed mechanism is consistent with that of the power input member 311, and the rotational center of the differential mechanism 330 is consistent with those of the first power output member 331 and the second power output member 332, such transmission mechanism 300 facilitates the motor output shaft 110 of the entire electric drive axle, the rotational center of the transmission mechanism 300, the first half-shaft 410 and the second half-shaft 420 to maintain a high coaxiality, resulting in a high transmission efficiency.

During operation, the power from the motor output shaft 110 is first transmitted to the power input member 311 of the transmission mechanism 300, i.e., the planetary variable-speed mechanism, and then to the differential mechanism 330, and finally transmitted to the first half-shaft 410 and the second half-shaft 420 in a one-to-one correspondence via the first power output member 331 and the second power output member 332, achieving the driving of the wheels 800.

It should be noted that the aforementioned planetary variable-speed mechanism may be a single-stage planetary variable-speed mechanism, a compound planetary variable-speed mechanism, or a two-stage or multi-stage planetary variable-speed mechanism composed of two or more sets of single-stage planetary assemblies. It should also be noted that the planetary variable-speed mechanism described above is generally a planetary reduction mechanism, where the power input member 311 of the planetary variable-speed mechanism is connected to the motor input shaft 110, while its output member is connected to the input member of the differential member and outputs low rotational speed. This compound planetary variable-speed mechanism may be a Simpson planetary gear transmission mechanism or a Ravigneaux planetary gear mechanism.

In the electric drive axle of the present application, a gap sufficient for mounting the first oil seal 510 is provided between the motor output shaft 110 and the first half-shaft 410 extending through the motor output shaft 110. By mounting the first oil seal 510 between the motor output shaft 110 and the first half-shaft 410, the gap between the motor output shaft 110 and the first half-shaft 410 is separated from corresponding first internal space 201 where the transmission mechanism 300 is mounted, which can prevent the oil fluid for lubricating the transmission mechanism 300 in the first internal space 201 from entering the gap, helping avoid oil churning, further reducing heat generation of the first half-shaft 410 and the motor output shaft 110 that are located near the gap and lowering the noise.

In some embodiments, the outer diameter of the first half-shaft 410 is greater than that of the second half-shaft 420, such that the torsional stiffness of the first half-shaft 410 is higher than that of the second half-shaft 420, which helps reduce vibrations generated during vehicle starting or speed shifting. Certainly, in the present application, the case where the outer diameter of the first half-shaft 410 is equal to that of the second half-shaft 420 is not excluded, and the case where the outer diameter of the first half-shaft 410 is smaller than that of the second half-shaft 420 is also not excluded.

It should be noted that if the first half-shaft 410 and the second half-shaft 420 have the same the torsional stiffness, i.e., the torsional angle per unit length is the same under the same torque, the first half-shaft 410 would generate a larger torsional angle than the second half-shaft 420 as the first half-shaft 410 is longer than the second half-shaft 420. When the vehicle starts, the wheels on the side of the second half-shaft 420 would bear the load first, causing unstable vehicle start-up and resulting in lateral shaking of the vehicle. Therefore, the manner where the first half-shaft 410 has a larger outer diameter than the second half-shaft 420 helps reduce the difference in torsional angle output by the two half-shafts, thereby being able to reduce shaking generated during vehicle starting or speed shifting.

In some embodiments, with reference to FIG. 1 and FIG. 2, the planetary variable-speed mechanism includes a first planetary gear set 310 and a second planetary gear set 320. The sun gear of the first planetary gear set 310 is the power input member 311. The planet carrier of the first planetary gear set 310 is connected to the sun gear of the second planetary gear set 320, and the planet carrier of the second planetary gear set 320 is connected to the input member of the differential mechanism 330. Such planetary variable-speed mechanism is a two-stage planetary variable-speed mechanism with a large transmission ratio, which can achieve a larger ground clearance such that the vehicle equipped with this planetary variable-speed mechanism has good passability.

For ease of understanding, in FIG. 1 and FIG. 2, the first planetary gear set includes a first sun gear, a first planet gear 312, a first ring gear 313, and a first planet carrier 314; and the second planetary gear set includes a second sun gear 321, a second planet gear 322, a second ring gear 323, and a second planet carrier 324. That is, the first sun gear is this power input member 311, the first planet carrier 314 is connected to the second sun gear 321, the second planet carrier 324 is the output of the entire planetary variable-speed mechanism, and both the first ring gear 313 and second ring gear 323 are disposed on the first housing. The first planetary gear set 310 achieves primary reduction, and the second planetary gear set 320 achieves secondary reduction.

It should be noted that single-stage planetary variable-speed mechanism and the compound planetary variable-speed mechanism have a relatively small transmission ratio, and correspondingly, the motor 100 has a relatively low maximum-rotational-speed. However, the aforementioned planetary variable-speed mechanism with the first planetary gear set 310 and second planetary gear set 320 has a relatively large transmission ratio, allowing selection of the motor 100 with a relatively high minimum-rotational-speed, which facilitates reducing the cost of motor 100. Additionally, if the transmission ratios are equal, this two-stage planetary variable-speed mechanism has a smaller radial dimension, a greater ground clearance, and better passability compared to single-stage or compound planetary variable-speed mechanism. The calculation method for transmission ratio of the aforementioned two-stage planetary variable-speed mechanism is based on the combination of the following formula: $i = {i}_{1} ∗ {i}_{2}$ (1) ${i}_{1} = \frac{{Z}_{x 1}}{{Z}_{t 1}} + 1$ (2) ${i}_{2} = \frac{{Z}_{x 2}}{{Z}_{t 2}} + 1$ (3) where Zₜ₁ denotes the tooth number of the first sun gear; Zₜ₂ denotes the tooth number of the second sun gear; Zₓ₁ denotes the tooth number of the first planetary gear; Zₓ₂ denotes the tooth number of the second planet gear.

In some embodiments, referring to FIG. 2, the motor 100 further includes a second housing 120, which is connected to the first housing 200 and has a second internal space 121. The electric drive axle further includes a first isolating portion 610, which is disposed on the first housing 200 or the second housing 120 and is interposed between the second internal space 121 and the first internal space 201, and the first isolating portion 610 is provided with a first through-hole 611 for allowing the motor output shaft 110 to extend through; where a second oil seal 520 and at least one bearing are provided between the inner wall of the first through-hole 611 and the outer wall of the motor output shaft 110.

The above first isolating portion 610 may be integrally formed with the second housing 120 directly. It may also be integrally formed with the first housing 200; or, it may be a separate component, with the first isolating portion 610 detachably mounted on the first housing 200 or the second housing 120. For example, referring to FIG. 2, the first isolating portion 610 is a separate isolation member that is detachably disposed on the second housing 120.

The aforementioned "at least one bearing" may be a motor mounting bearing, or a transmission mechanism support bearing; it may also indicate arranging a motor mounting bearing and a transmission mechanism support bearing at the same time. In the example of FIG. 2, the first isolating portion 610 is disposed on the second housing 120, and both a first motor mounting bearing 710 and a first transmission mechanism support bearing 730 are arranged within the first through-hole 611 of the first isolating portion 610. This arrangement is more conducive to improving the coaxiality of the rotational centers of the motor output shaft 110 and the transmission mechanism 300, reducing wear of the second oil seal 520, and enhancing the reliability and durability of the electric drive axle.

In such structure, the bearing disposed within the first through-hole 611 helps reduce variations in the radial distance between the inner wall of this through-hole and the outer wall of the motor output shaft 110, thereby reducing wear of the second oil seal 520.

Optionally, the electric drive axle further includes a second isolating portion 620, a third oil seal 530, and a half-shaft support bearing 740. The second isolating portion 620 and the first isolating portion 610 are axially distributed at both ends of the second housing 120 respectively. The second isolating portion 620 is provided with a second through-hole 621, and the first half-shaft 410 extends through the second through-hole 621. The third oil seal 530 is disposed between the inner wall of the second through-hole 621 and the outer wall of the motor output shaft 110. The half-shaft support bearing 740 is disposed between the inner wall of the second through-hole 621 and the outer wall of the first half-shaft 410. In this arrangement, the half-shaft support bearing 740 disposed within the second through-hole 621 can not only improve the coaxiality of the motor output shaft 110 and the first half-shaft 410 but also help reduce wear of the third oil seal 530, thereby facilitating enhancing the reliability and durability of the electric drive axle.

In some embodiments, referring to FIG. 1 and FIG. 2, the transmission mechanism 300 includes a planetary variable-speed mechanism and a differential mechanism 330 that are interconnected for mutual transmission. The planetary variable-speed mechanism includes a first planetary gear set 310 and a second planetary gear set 320. The sun gear of the first planetary gear set 310 is the power input member 311. The planet carrier of the first planetary gear set 310 is connected to the sun gear of the second planetary gear set 320. The planet carrier of the second planetary gear set 320 is connected to the input member of the differential mechanism 330. Both the first power output member 331 and the second power output member 332 are output members of the differential mechanism 330, where a bearing is arranged between the planet carrier of the first planetary gear set 310 and the first isolating portion 610, and a bearing is also arranged between the planet carrier of the second planetary gear set 320 and the first housing 200.

A bearing is arranged between the planet carrier of the first planetary gear set 310 and the first isolating portion 610, that is to say, the bearing is arranged between the first planet carrier 314 and the first isolating portion 610.

A bearing is also arranged between the planet carrier of the second planetary gear set 320 and the first housing 200, that is to say, the bearing is arranged between the second planet carrier 324 and the first housing 200.

The aforementioned bearing arranged between the planet carrier of the first planetary gear set 310 and the first isolating portion 610, as well as the bearing arranged between the planet carrier of the second planetary gear set 320 and the first housing 200, may both be referred to as a planetary variable-speed mechanism support bearing or transmission mechanism support bearing. In FIG. 2, the bearing between the planet carrier of the first planetary gear set 310 and the first isolating portion 610 is the first transmission mechanism support bearing 730, and the bearing between the planet carrier of the second planetary gear set 320 and the first housing 200 is the second transmission mechanism support bearing 750.

Such structure is equivalent to providing support for the respective planet carriers of two-stage planetary gear sets in the planetary variable-speed mechanism, which is more conductive to improving the coaxiality between the rotational center of the planetary variable-speed mechanism and the motor output shaft 110 and also increasing the coaxiality among the first half-shaft 410, the second half-shaft 420, and the motor output shaft 110, thereby enhancing the durability and reliability of the electric drive axle.

In other embodiments (not shown), a bearing is arranged between the planet carrier of the first planetary gear set 310 and the first housing 200, and a bearing is also arranged between the planet carrier of the second planetary gear set 320 and the first housing 200. That is, the position where the bearing for the first transmission mechanism 300 is arranged is located between the planet carrier of the first planetary gear set 310 and the first housing 200.

Optionally, referring to FIG. 1 and FIG. 2, the differential mechanism 330 is mounted on a differential mechanism 330 housing, which is integrally formed with the planet carrier of the second planetary gear set 320, that is, the differential mechanism 330 housing is integrally formed with the second planet carrier 324. Moreover, a third transmission mechanism support bearing 760 is arranged between the differential mechanism 330 housing and the first housing 200. In this way, it helps improve the coaxiality between the rotational center of the second planetary gear set 320 and the rotational center of the differential mechanism 330, and also increase the durability and reliability of the electric drive axle.

It should be noted that any of the above electric drive axles can be applied to vehicles, which may be pure electric vehicles or hybrid vehicles. Correspondingly, the present application provides a vehicle including the electric drive axle according to any of the above embodiments.

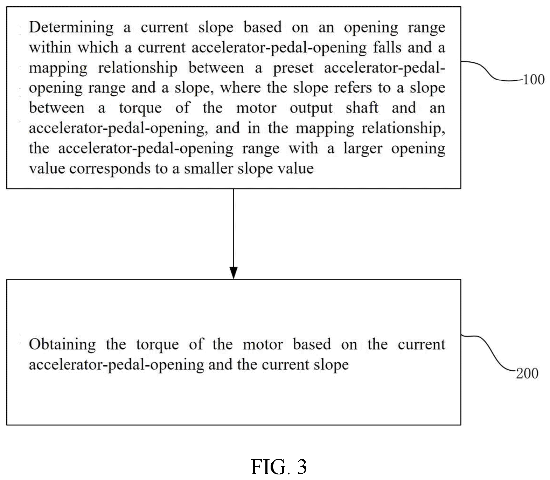

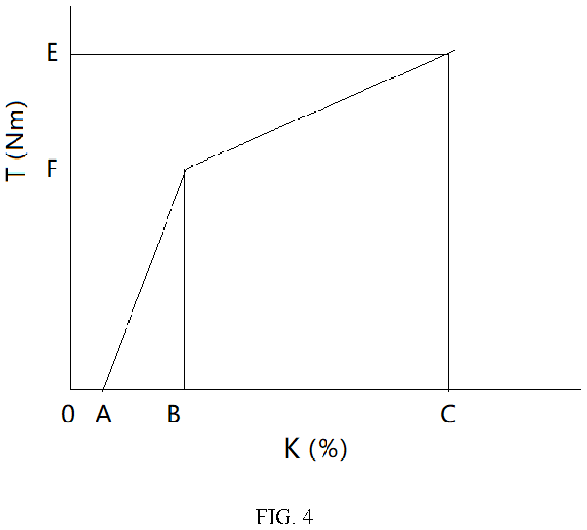

The present application further provides a control method for an electric drive axle, where the electric drive axle is the electric drive axle according to any of the above embodiments. Referring to FIG. 3 and FIG. 4, the control method includes:
Step S100: determining the current slope based on an accelerator-pedal-opening range within which a current accelerator-pedal-opening falls and the mapping relationship between a preset accelerator-pedal-opening range and slope, where this slope refers to a slope P between the torque T of the motor output shaft 110 and the accelerator-pedal-opening K, and in the mapping relationship, the accelerator-pedal-opening range with a larger opening value corresponds to a smaller slope value.

The accelerator-pedal-opening above is acquired by a sensor disposed on or near the accelerator pedal. The opening of accelerator pedal reflects driving intention, for example, an increased accelerator-pedal-opening indicates a driving intent to accelerate the vehicle, and a decreased accelerator-pedal-opening indicates a driving intent to decelerate the vehicle.

There are at least two preset accelerator-pedal-opening ranges. In the example of FIG. 3, two accelerator-pedal-opening ranges are set, corresponding to the ranges of A ≤ K ≤ B and B ≤ K ≤ C, respectively; and there are two corresponding slope values accordingly.

For example, in Step S100, referring to FIG. 4, determining the current slope based on an opening range within which a current accelerator-pedal-opening falls and the mapping relationship between an accelerator-pedal-opening range and a slope includes:
Step S110: obtaining the current accelerator-pedal-opening and the preset slope change trigger opening; where for example, in FIG. 4, the accelerator-pedal-opening B is the preset slope change trigger opening.

Step S120: determining the current slope as a first slope if the current accelerator-pedal-opening is greater than the preset slope change trigger opening; and determining the current slope as a second slope if the current accelerator-pedal-opening is less than the preset slope change trigger opening; where referring to FIG.4, the first slope corresponding to the horizontal axis B ≤ K ≤ C is smaller than the second slope corresponding to the horizontal axis A ≤ K ≤ B.

Step S200: obtaining a motor torque based on the current accelerator-pedal-opening and the current slope; where for example, in FIG. 4, the value of the vertical axis T can be obtained based on the value of current accelerator-pedal-opening K and the corresponding slope.

In the control method of the present application, since the accelerator-pedal-opening range with a larger opening value corresponds to smaller slope value, during vehicle startup, the motor torque increases rapidly first, which makes the responsiveness of the motor 100 to the power system higher; then the motor torque accelerates at a relatively slow rate, which is more conductive to controlling the torsional angle difference between the first half-shaft 410 and the second half-shaft 420, reducing the shock degree of the vehicle, avoiding wheel slip, and ensuring reliable starting of the vehicle.

In the description the embodiments of the present application, it should be noted that the terms "mounted" and "connected" should be interpreted in a broad sense unless otherwise clearly defined and restricted. For example, it may refer to a fixed connection, an indirect connection via an intermediate medium, internal communication between two components, or an interactive relationship between two components. For those of ordinary skill in the art, the specific meanings of the aforementioned terms in the embodiments of the present application can be understood according to specific circumstances.

The terms "first", "second" and the like in the specification of the embodiments of the present application and claims and the aforementioned accompanying drawings are used to distinguish similar objects, and are not necessarily used to describe a specific order or sequence.

Finally, it should be noted that the above embodiments are only used to illustrate the technical solutions of the present invention and not to limit them; although the present invention has been described in detail with reference to the aforementioned embodiments, those of ordinary skill in the art should understand that they can still modify the technical solutions recorded in the aforementioned embodiments, or equivalently replace some or all of the technical features therein; and such modifications or replacements do not make the essence of the corresponding technical solutions deviate from the scope of the technical solutions of the embodiments of the present invention.

## Claims

1. An electric drive axle, **characterized by** comprising:
a motor, comprising a motor output shaft provided with a first axial through hole;
a transmission assembly, comprising a first housing and a transmission mechanism, wherein the first housing has a first internal space, the transmission mechanism is disposed within the first internal space, and the motor output shaft extends from outside of the first housing into the first internal space; the transmission mechanism has a power input member, a first power output member, and a second power output member; the motor output shaft, the power input member, the first power output member, and the second power output member are coaxially arranged in sequence; and the power input member is provided with a second axial through hole;
a first half-shaft, extending through the first axial through hole and the second axial through hole and coaxially connected to the first power output member, wherein a gap is formed between the first half-shaft and a hole wall of the first axial through hole;
a second half-shaft, coaxially connected to the second power output member;
a first oil seal, hermetically arranged in the gap, wherein the first oil seal separates the gap from the first internal space.

2. The electric drive axle according to claim 1, wherein an outer diameter of the first half-shaft is greater than an outer diameter of the second half-shaft.

3. The electric drive axle according to claim 1, wherein the transmission mechanism comprises a planetary variable-speed mechanism and a differential mechanism that are interconnected for mutual transmission; the second axial through hole extends axially through the planetary variable-speed mechanism; the power input member is an input member of the planetary variable-speed mechanism; and both the first power output member and the second power output member are output members of the differential mechanism.

4. The electric drive axle according to claim 3, wherein the planetary variable-speed mechanism comprises a first planetary gear set and a second planetary gear set, a sun gear of the first planetary gear set is the power input member, a planet carrier of the first planetary gear set is connected to a sun gear of the second planetary gear set, and a planet carrier of the second planetary gear set is connected to an input member of the differential mechanism.

5. The electric drive axle according to claim 1, wherein
the motor further comprises a second housing connected to the first housing, and the second housing has a second internal space;
the electric drive axle further comprises a first isolating portion disposed on the first housing or the second housing, and the first isolating portion is interposed between the second internal space and the first internal space; the first isolating portion is provided with a first through-hole for allowing the motor output shaft to pass through;
wherein a second oil seal and at least one bearing are disposed between an inner wall of the first through-hole and an outer wall of the motor output shaft.

6. The electric drive axle according to claim 5, wherein the transmission mechanism comprises a planetary variable-speed mechanism and a differential mechanism that are interconnected for mutual transmission, wherein the planetary variable-speed mechanism comprises a first planetary gear set and a second planetary gear set; a sun gear of the first planetary gear set is the power input member, a planet carrier of the first planetary gear set is connected to a sun gear of the second planetary gear set; a planet carrier of the second planetary gear set is connected to an input member of the differential mechanism, and both the first power output member and the second power output member are output members of the differential mechanism;
wherein a bearing is provided between the planet carrier of the first planetary gear set and the first isolating portion, and a bearing is also provided between the planet carrier of the second planetary gear set and the first housing; or, a bearing is provided between the planet carrier of the first planetary gear set and the first housing, and a bearing is also provided between the planet carrier of the second planetary gear set and the first housing.

7. The electric drive axle according to claim 6, wherein the differential mechanism is mounted on a differential mechanism housing, and the differential mechanism housing is integrally formed with the planet carrier of the second planetary gear set.

8. A vehicle, **characterized by** comprising the electric drive axle according to any one of claims 1-7.

9. A control method for an electric drive axle, **characterized in that** the electric drive axle is the electric drive axle according to any one of claims 1-7, and the control method comprises:
determining a current slope based on an opening range within which a current accelerator-pedal-opening falls and a mapping relationship between a preset accelerator-pedal-opening range and a slope, wherein the slope refers to a slope between a torque of the motor output shaft and an accelerator-pedal-opening, and in the mapping relationship, the accelerator-pedal-opening range with a larger opening value corresponds to a smaller slope value;
obtaining the torque of the motor based on the current accelerator-pedal-opening and the current slope.

10. The control method for an electric drive axle according to claim 9, wherein determining a current slope based on an opening range within which a current accelerator-pedal-opening falls and a mapping relationship between a preset accelerator-pedal-opening range and a slope comprises:
obtaining the current accelerator-pedal-opening and a preset slope change trigger opening;
determining the current slope as a first slope if the current accelerator-pedal-opening is greater than the preset slope change trigger opening; and determining the current slope as a second slope if the current accelerator-pedal-opening is less than the preset slope change trigger opening, wherein the first slope is less than the second slope.
